# FASCICULE DE BREVET EUROPEEN

(11) **EP 1 153 688 B1**
(45) Date de publication et mention de la délivrance du brevet: **17.09.2003**
(21) Numéro de dépôt: 00109884.7
(22) Date de dépôt: 10.05.2000
(51) Int. Cl.: B23H 7/10

(54) **Dispositif de coupe pour fils de machines à électroérosion**
Schneidvorrichtung für Drähte von Funkenerosionsmaschinen
Wire cutting device for electroerosion apparatus

(43) Date de publication de la demande: 14.11.2001
(73) Titulaire: CHARMILLES TECHNOLOGIES S.A., 1217 Meyrin 1 (CH)
(72) Inventeur: Matter Daniel, 1219 Aire (CH); Ruffin Jean-André, 74380 Cranves-Sales (FR)
(74) Mandataire: Micheli & Cie

(56) Documents cités:
- EP-A- 0 803 308
- CH-A- 680 840
- US-A- 5 454 523

## Description

La présente invention concerne un dispositif de coupe pour fils de machines à électroérosion par fil dans lesquelles le fil, après son passage dans une zone d'usinage, est coupé en tronçons qui sont évacués en tant que déchets, le dispositif de coupe comportant une roue de fraise munie de dents destinées à coopérer avec une surface de coupe d'une pièce contre-couteau comportant un alésage d'alimentation à travers lequel le fil est avancé pour être débité par les dents de la roue de fraise (voir par example le document EP-A-0 803 308).

Lorsque le fil est ainsi avancé d'une longueur prédéterminée dans l'alésage d'alimentation, il est coupé par cisaillement entre le bord de l'alésage d'alimentation et la face frontale d'une des dents de la roue de la fraise coopérant avec la surface de coupe. Ce bord de l'alésage s'use relativement rapidement et la coupe devient peu efficace, voire impossible. Des changements de la pièce contre-couteau doivent donc être effectués fréquemment.

Le but de la présente invention est de remédier aux inconvénients précités et l'invention est caractérisée à cet effet par le fait que la pièce contre-couteau est montée de façon tournante autour d'un axe confondu avec celui dudit alésage, des moyens étant prévus pour favoriser une rotation de la pièce contre-couteau lorsque la roue de fraise est mise en rotation.

Le bord entier de l'alésage entre ainsi successivement en contact avec le fil et sert d'arête de coupe. Ce bord est donc beaucoup moins rapidement usé que dans les dispositifs connus et la pièce contre-couteau possède une longévité considérablement plus grande, tout en assurant une coupe précise et nette.

Un mode d'exécution préféré est caractérisé par le fait que la pièce contre-couteau est de forme générale cylindrique à base circulaire et que lesdits moyens comprennent une échancrure prévue sur le pourtour de la surface cylindrique de la pièce contre-couteau qui coopère avec son support au moyen de deux bandes circulaires prévues de part et d'autre de ladite échancrure.

Ces caractéristiques permettent de diminuer fortement les forces de frottement entre la pièce contre-couteau et son support et favorisent donc une rotation libre de cette pièce autour de son axe.

Favorablement, lesdits moyens comprennent un agencement décalé du centre des dents de la roue de fraise par rapport audit alésage d'alimentation tel que ces dents touchent la surface de coupe sur une distance plus grande d'un côté de l'alésage d'alimentation que de l'autre côté de cet alésage d'alimentation.

On obtient ainsi un entraînement en rotation efficace de la pièce contre-couteau évitant une usure ponctuelle de son bord de coupe de l'alésage axial.

De façon avantageuse, lesdits moyens comprennent une denture prévue sur les faces frontales desdites dents destinée à coopérer avec la surface de coupe, cette denture étant agencée de façon oblique par rapport à l'allongement de la face frontale.

L'orientation oblique de cette denture permet également de favoriser l'entraînement en rotation de la pièce contre-couteau.

D'autres avantages ressortent des caractéristiques exprimées dans les revendications dépendantes et de la description exposant ci-après l'invention plus en détails à l'aide de dessins qui représentent schématiquement et à titre d'exemple un mode d'exécution.
La figure 1 illustre une machine à électroérosion munie du dispositif de coupe selon l'invention.
La figure 2 est une vue de face d'une tête réceptrice pour le fil d'usinage dans laquelle ce dispositif de coupe est intégré.
La figure 3 est une vue de face de ce dispositif de coupe.
Les figures 4 et 5 représentent des particularités de ce dispositif de coupe.

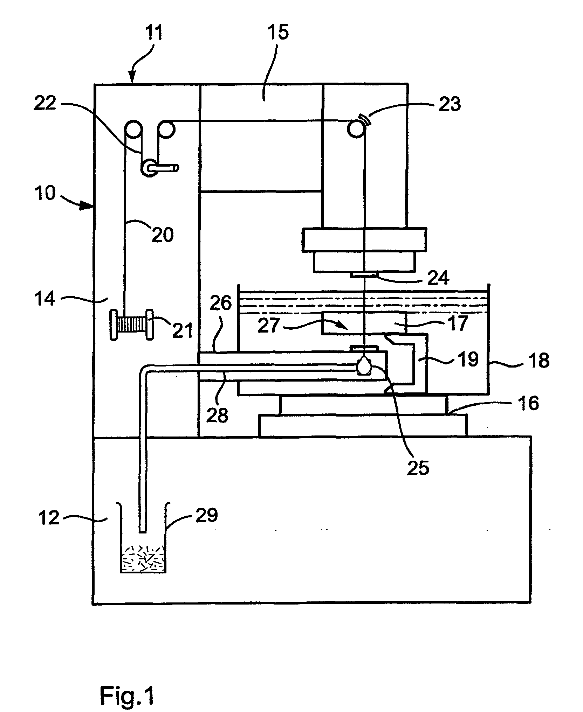

En référence à la figure 1, une machine à électroérosion 10, dans laquelle le dispositif de coupe conformément à l'invention est monté, comprend un bâti 11 formé d'une base 12, d'une colonne 14 et d'une tête 15. Une table 16 est montée sur la base 12 et porte une pièce à usiner grâce à des éléments de fixation 19. Cette table 16 permet des déplacements de la pièce à usiner suivant deux directions orthogonales. La pièce à usiner est disposée dans un bac 18 contenant un liquide d'usinage adéquat.

Le fil 20 est déroulé d'une bobine 21, passe par des galets de renvoi et de tension 22, un organe de freinage 23 et un guide-fil supérieur 24 et est finalement attiré dans une tête réceptrice 25 montée sur un bras 26 fixé sur la colonne 14. Cette tête réceptrice 25 sert d'organe d'alignement du fil dans la zone d'usinage 27 et d'élément d'entraînement du fil. Elle contient un dispositif de coupe 30 permettant de débiter le fil en tronçons d'une longueur prédéterminée. Ces tronçons de fils sont ensuite évacués par un conduit 28 vers un réservoir de récupération 29. Des moyens électriques connus et non illustrés sont prévus pour produire des décharges érosives entre le fil 20 et la pièce à usiner 17.

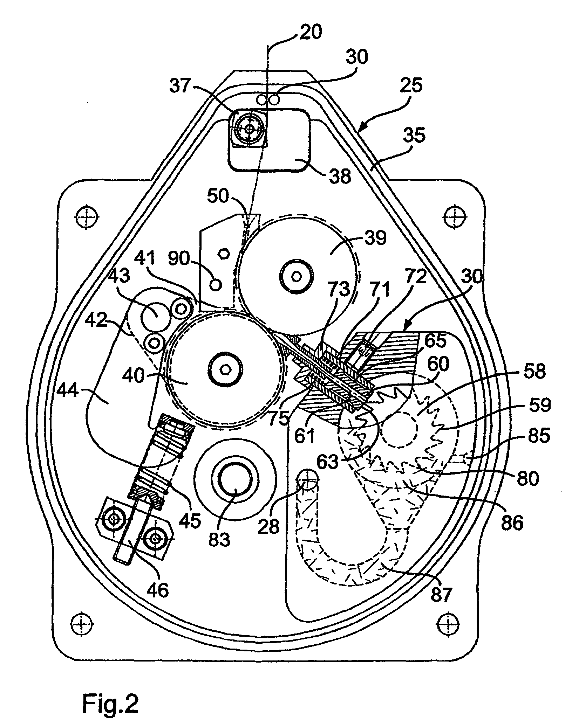

La tête réceptrice 25 et le dispositif de découpe 30 qu'elle contient sont décrits ci-après en référence aux figures 2 à 5. La tête réceptrice 25 comprend un boîtier 35 qui peut être fermé au moyen d'un couvercle non représenté. Le fil 20 entre dans le boîtier au niveau d'un guide-fil 36, passe par un contact électrique 37 monté sur un support isolant 38 pour coopérer avec des galets d'entraînement 39,40. Le galet d'entraînement 39 est fixe, tandis que le galet 40 est mobile et sollicité avec une force prédéterminée réglable contre le galet fixe 39. Ce galet 40 est monté à cet effet sur un premier bras 41 d'un levier 42 à deux bras articulé sur un pivot 43. Le second bras 44 de ce levier est soumis à l'action d'un ressort 45 dont l'effet peut être réglé grâce à une vis 46. La tête réceptrice 25 comprend encore un cône de guidage 50 pour le fil permettant une réception précise du fil entre les deux galets 39,40.

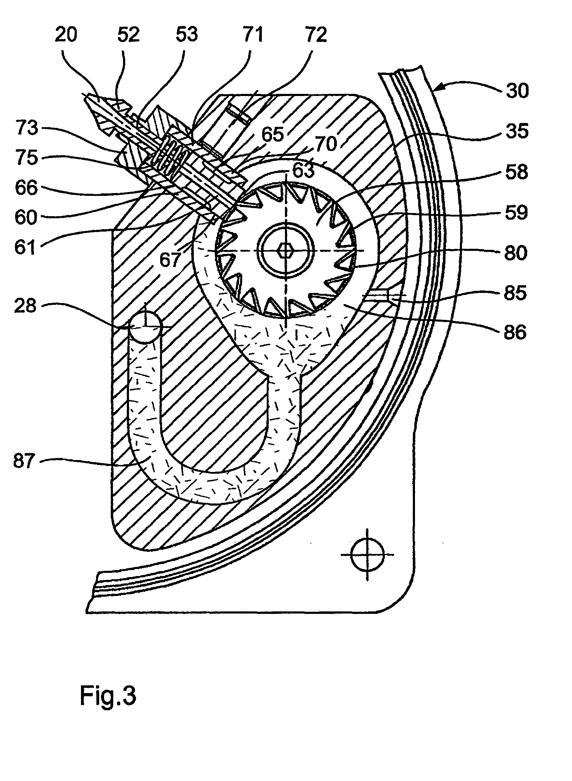

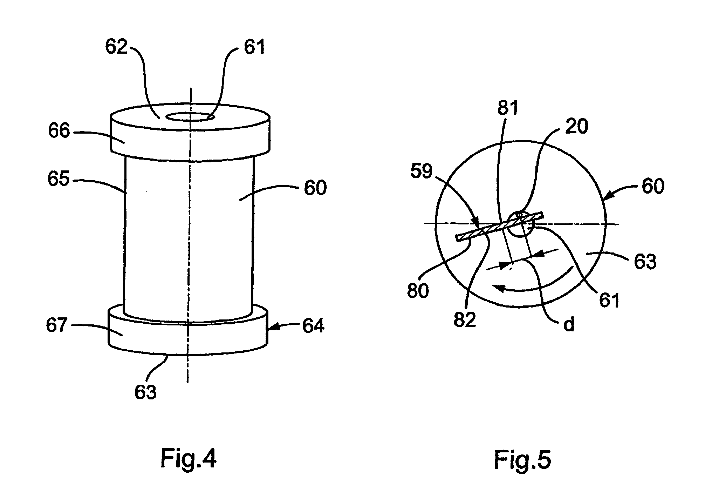

A la sortie de ces galets, le fil entre dans le dispositif de coupe 30 grâce à un second cône de guidage 52 suivi d'un canal de guidage 53. Ce dispositif de coupe comprend une roue de fraise 58 entraînée en rotation suivant un sens antihoraire aux figures 2 et 3 et comportant des dents 59 destinées à coopérer avec une pièce contre-couteau 60. Cette dernière est de forme générale cylindrique à base circulaire et présente un alésage central 61 pour le fil 20 (fig. 4) et deux faces principales plates 62, 63. Sa surface cylindrique 64 présente une échancrure 65 occupant tout son pourtour en ne laissant que deux bandes circulaires 66, 67 disposées de part et d'autre de l'échancrure 65.

Cette pièce contre-couteau 60 est logée dans une chambre cylindrique 70 délimitée par une douille 71 montée dans le boîtier 35 et y est maintenue grâce à une vis de blocage 72.

Le côté arrière de cette douille est fermé par un couvercle 73 fixe grâce à des vis et comportant un trou central pour le canal de guidage 53 et le fil 20. Un ressort à boudin 75 est inséré entre le couvercle 73 et la pièce contre-couteau 60 qui est ainsi sollicitée par sa face antérieure 63 contre les dents de la roue de fraise 58. La pièce contre-couteau 60 est ainsi montée de façon coulissante et tournante autour d'un axe confondu avec celui de l'alésage 61 et coopère avec la douille 71 uniquement par les deux bandes 66, 67 de surface réduite. Le frottement avec la surface intérieure de la douille 71 est donc considérablement réduit, ce qui favorise la rotation de la pièce contre-couteau dans son logement.

Telles qu'illustrées à la figure 5, les dents 59 de la roue de fraise 58 comportent une surface frontale 80 coopérant avec la face 63 de la pièce contre-couteau 60. Cependant, le centre 81 de ces surfaces frontales et le plan médian de la roue de fraise sont latéralement décalés d'une distance prédéterminée d par rapport à l'axe de l'alésage 61 de sorte que ces surfaces frontales 80 des dents 59 touchent la face 63 sur une distance plus grande d'un côté de l'alésage que de l'autre côté. Il en résulte de cet agencement décalé un entraînement en rotation de la pièce contre-couteau 60 lorsque la roue de fraise est mise en rotation.

En outre, la surface frontale 80 des dents 59 est munie d'une denture 82 destinée à coopérer avec la face 63 et le fil 20. Cette denture 82 est agencée de façon oblique par rapport à l'allongement de la face frontale 80, ce qui permet de favoriser un entraînement en rotation de la pièce contre-couteau 60 lorsque la roue de fraise est mise en rotation.

L'entraînement de cette roue de fraise et des deux galets 39, 40 est obtenu grâce à des courroies non illustrées coopérant avec un arbre moteur 83 (fig. 2).

Le dispositif de coupe comprend en outre des moyens d'évacuation hydrauliques ou pneumatiques destinés à l'évacuation des tronçons de fils coupés vers le réservoir de récupération 29. Un fluide transporteur sous pression, par exemple de l'eau déionisée, est introduit par un orifice 85 dans une chambre de coupe 86 dans laquelle la roue de fraise 58 est agencée. Cette chambre de coupe 86 est connectée par un tube 87 au conduit 28 menant au réservoir de récupération 29. Les morceaux de fils coupés sont ainsi entraînés vers ce réservoir 29 où ils sont déposés. Le fluide transporteur est ensuite filtré et reconduit vers la chambre de coupe 86.

La vitesse d'avancement du fil vers la roue de fraise et la vitesse de rotation de cette dernière sont réglées de façon à obtenir une longueur adéquate des morceaux de fils permettant un transport aisé sans risque de boucher le conduit 28. Du fait de l'échancrure 65 sur la surface cylindrique de la pièce contre-couteau 60, le frottement de cette dernière est considérablement diminué, ce qui favorise grandement la mise en rotation de cette pièce qui est aisément entraînée d'une part du fait de l'agencement décalé de la roue de fraise 58 et d'autre part à cause de la denture oblique 82 prévue sur les dents 59. Ainsi, la coupe du fil 20 par cisaillement entre le bord de l'alésage 61 et la surface frontale 80 des dents 59 est effectuée continuellement à d'autres endroits de l'alésage 61, ce qui permet de diminuer de façon considérable l'usure de cette pièce contre-couteau 60 qui ne doit être changée qu'après des périodes d'utilisation au moins cinq fois plus longues qu'avec les dispositifs de coupe connus.

La tête réceptrice 25 possède en outre un second orifice 90 destiné à l'introduction du fluide sous pression, par exemple de l'eau déionisée. Ce fluide pénètre également dans le dispositif de coupe 30 par le canal de guidage 53 où il favorise un coulissement axial et une rotation de la pièce contre-couteau 60 dans la douille 71. L'échancrure 65 forme ainsi une chambre d'accumulation dans laquelle ce fluide est accumulé et d'où il peut être délivré vers la bande circulaire inférieure 67 et supérieure 66 pour assurer une lubrification et une rotation facilitée de la pièce contre-couteau 60 et pour diminuer l'usure de ces deux pièces.

Il est bien entendu que le mode d'exécution décrit ci-dessus ne présente aucun caractère limitatif et qu'il peut recevoir toute modification désirable à l'intérieur du cadre tel que défini par la revendication 1. En particulier, la machine à électroérosion par fil pourrait présenter une toute autre construction. La pièce contre-couteau pourrait être entraînée en rotation par d'autres moyens, par exemple par un fluide sous pression ou par un arbre moteur. Une rondelle à faible coefficient de frottement pourrait être intercalée entre le ressort et la pièce contre-couteau. Le dispositif de coupe pourrait former une unité mécanique indépendante de la tête réceptrice 25.

## Revendications

1. Dispositif de coupe pour fils de machines à électroérosion (10) par fil dans lesquelles le fil (20) après son passage dans une zone d'usinage (27) est coupé en tronçons qui sont évacués en tant que déchets, le dispositif de coupe comportant une roue de fraise (58) munie de dents (59) destinées à coopérer avec une surface de coupe (63) d'une pièce contre-couteau (60) comportant un alésage d'alimentation (61) à travers lequel le fil est avancé pour être débité par les dents (59) de la roue de fraise (58), **caractérisé par le fait que** la pièce contre-couteau (60) est montée de façon tournante autour d'un axe confondu avec celui dudit alésage (61), des moyens (65) étant prévus pour favoriser une rotation de la pièce contre-couteau lorsque la roue de fraise (58) est mise en rotation.

2. Dispositif suivant la revendication 1, **caractérisé par le fait que** la pièce contre-couteau (60) est de forme générale cylindrique à base circulaire et que lesdits moyens comprennent une échancrure (65) prévue sur le pourtour de la surface cylindrique de la pièce contre-couteau (60) qui coopère avec son support (71) au moyen de deux bandes circulaires (66,67) prévues de part et d'autre de ladite échancrure (65).

3. Dispositif selon la revendication 1, **caractérisé par le fait que** la pièce contre-couteau (60) est logée de façon tournante dans une chambre cylindrique (70) et sollicitée par un ressort (75) contre les dents (59) de la roue de fraise (58), ledit ressort (75) s'appuyant sur un couvercle (73) fixé sur la partie arrière de la chambre cylindrique (70) et comportant un conduit central destiné au passage du fil (20).

4. Dispositif selon l'une des revendications 1 à 3, **caractérisé par le fait que** lesdits moyens comprennent un agencement décalé du centre (81) des dents (59) de la roue de fraise (58) par rapport audit alésage d'alimentation (61), tel que ces dents (59) touchent la surface de coupe (63) sur une distance plus grande d'un côté de l'alésage d'alimentation (61) que de l'autre côté de cet alésage d'alimentation (61).

5. Dispositif selon la revendication 4, **caractérisé par le fait que** le centre (81) des surfaces frontales (80) des dents (59) et le plan médian de la roue de fraise (58) sont décalés d'une distance (d) prédéterminée de l'axe de rotation de la pièce contre-couteau (60) de sorte que ces surfaces frontales (80) touchent la surface de coupe (63) de la pièce contre-couteau (60) sur une distance plus grande d'un côté de l'axe de rotation que de l'autre côté pour produire un entraînement en rotation de la pièce contre-couteau (60) lorsque la roue de fraise (58) est mise en rotation.

6. Dispositif selon l'une des revendications 1 à 5, **caractérisé par le fait que** lesdits moyens comprennent une denture (82) prévue sur les faces frontales (80) desdites dents (58) destinées à coopérer avec la surface de coupe (63), cette denture (82) étant agencée de façon oblique par rapport à l'allongement de la face frontale (80).

7. Dispositif selon l'une des revendications précédentes, **caractérisé par le fait qu'**il comprend des moyens d'évacuation (85,86) hydrauliques ou pneumatiques destinés à l'évacuation des tronçons de fils coupés vers un réservoir de récupération (29).

8. Dispositif selon la revendication 7, **caractérisé par le fait que** les moyens d'évacuation comprennent une chambre de coupe (86) dans laquelle la roue de fraise (58) est agencée, cette chambre étant reliée à au moins une entrée (85) d'un fluide et à un conduit de sortie (28) relié à un réservoir de récupération (29).

9. Dispositif selon la revendication 2, **caractérisé par le fait que** ladite échancrure (65) est en communication avec un fluide de façon à constituer une chambre d'accumulation pour ce fluide qui joue le rôle de lubrifiant entre la pièce contre-couteau (60) et son support (71).

## Patentansprüche

1. Schneidvorrichtung für Drähte von Draht-Funkenerosionsmaschinen (10), in denen der Draht (20) nach seinem Durchlauf durch eine Bearbeitungszone (27) in Stücke geschnitten wird, die als Abfall weggeführt werden, wobei die Schneidvorrichtung ein Fräsrad (58) umfasst, das mit Zähnen (59) versehen ist, die dazu bestimmt sind, mit einer Schneidfläche (63) eines Gegenschneideorgans (60) zusammenzuwirken, das eine Zufuhrbohrung (61) hat, durch die der Draht eingeschoben wird, um von den Zähnen (59) des Fräsrades (58) weitergeführt zu werden, **dadurch gekennzeichnet, dass** das Gegenschneideorgan (60) drehbar um eine Achse montiert ist, die mit der Achse dieser Bohrung (61) zusammenfällt, wobei Mittel (65) vorgesehen sind, um eine Drehung des Gegenschneideorgans (58) zu begünstigen, wenn das Fräsrad (58) in Drehung versetzt wird.

2. Vorrichtung nach Anspruch 1, **dadurch gekennzeichnet, dass** das Gegenschneideorgan (60) von allgemein zylindrischer Gestalt mit kreisförmiger Basis ist und dass die benannten Mittel eine Vertiefung (65) umfassen, die auf dem Umfang der zylindrischen Oberfläche des Gegenschneideorgans (60) angebracht ist und mit dessen Träger (71) mittels zweier kreisförmiger Ringe (66, 67) zusammenwirkt, die zu beiden Seiten dieser Vertiefung (65) angebracht sind.

3. Vorrichtung nach Anspruch 1, **dadurch gekennzeichnet, dass** das Gegenschneideorgan (60) drehbar in einer zylindrischen Kammer (70) sitzt und durch eine Feder (75) gegen die Zähne (59) des Fräsrades (58) gedrückt wird, wobei diese Feder (75) an einer Kappe (73) ruht, die auf dem hinteren Abschnitt der zylindrischen Kammer (70) befestigt ist und einen zentralen Kanal für den Durchlass des Drahtes (20) umfasst.

4. Vorrichtung nach einem der Ansprüche 1 bis 3, **dadurch gekennzeichnet, dass** die besagten Mittel eine gegenüber dieser Zufuhrbohrung (61) versetzte Anordnung des Mittelpunktes (81) der Zähne (59) des Fräsrades (58) haben, so dass diese Zähne (59) die Schneidfläche (63) auf der einen Seite der Zuführbohrung (61) über eine längere Strecke berühren als auf der anderen Seite dieser Zufuhrbohrung (61).

5. Vorrichtung nach Anspruch 4, **dadurch gekennzeichnet, dass** die Mitte (81) der Stirnflächen (80) der Zähne (58) und die Mittelebene des Fräsrades (58) um einen bestimmten Betrag (d) gegen die Drehachse des Gegenschnedeorgans (60) versetzt sind, so dass diese Stirnflächen (80) die Schneidfläche (63) des Gegenschneideorgans auf der einen Seite der Drehachse über eine längere Strecke berühren als auf der anderen Seite, um zu einer Drehung des Gegenschneideorgans (60) zu führen, wenn das Fräsrad (58) gedreht wird.

6. Vorrichtung nach einem der Ansprüche 1 bis 5, **dadurch gekennzeichnet, dass** diese Mittel eine Zahnung (82) haben, die auf den Stirnflächen (80) dieser Zähne (58) angebracht ist, die dafür bestimmt sind, mit der Schneidfläche (63) zusammenzuwirken, wobei diese Zahnung (82) schräg zur Verlängerung der Stirnfläche (80) angeordnet ist.

7. Vorrichtung nach einem der vorangehenden Ansprüche, **dadurch gekennzeichnet, dass** sie hydraulische oder pneumatische Mittel zum Abtransport (85, 86) hat, die dem Abtransport der abgeschnittenen Drahtstücke zu einem Sammelbehälter (29) dienen.

8. Vorrichtung nach Anspruch 7, **dadurch gekennzeichnet, dass** die Mittel zum Abtransport eine Schneidkammer (86) umfassen, in der das Fräsrad (58) untergebracht ist, wobei diese Kammer an zumindest einen Fluidzulauf (85) und einen mit einem Sammelbehälter (29) verbundenen Ausgangskanal (28) angeschlossen ist.

9. Vorrichtung nach Anspruch 2, **dadurch gekennzeichnet, dass** diese Vertiefung (65) so mit einem Fluid in Verbindung steht, dass eine Sammelkammer für dieses Fluid, das als Schmiermittel zwischen der Gegenschneide (60) und ihrem Träger (71) dient, gebildet wird.

## Claims

1. A cutter device for cutting the wire of a wire electroerosion machine (10) in which the wire passes through a machining zone (27) and is then cut into segments which are removed as scrap, the cutter device comprising a milling wheel (58) provided with teeth (59) for co-operating with a cutting surface (63) of an anvil piece (60) having a feed bore (61) through which the wire is advanced to be milled by the teeth (59) of the milling wheel (58), the device being **characterized by** the fact that the anvil piece (60) is mounted to be rotatable about an axis that coincides with the axis of said bore (61), means (65) being provided to facilitate rotation of the anvil piece when the milling wheel (58) is set into rotation.

2. A device according to claim 1, **characterized by** the facts that the anvil piece (60) is generally in the shape of a cylinder on a circular base and that said means include a setback (65) provided around the cylindrical surface of the anvil piece (60) which co-operates with its support (71) by means of two circular bands (66, 67) provided at opposite ends of said setback (65).

3. A device according to claim 1, **characterized by** the fact that the anvil piece (60) is rotatably received in a cylindrical chamber (70) and is urged by a spring (75) against the teeth (59) of the milling wheel (58), said spring (75) bearing against a cover (73) fixed on the rear portion of the cylindrical chamber (70) and including a central duct for passing the wire (20).

4. A device according to any one of claims 1 to 3, **characterized by** the fact that said means comprise an off-center arrangement (81) of the teeth (59) of the milling wheel (58) relative to said feed bore (61), such that the teeth (59) touch the cutting surface (63) over a longer distance on one side of the feed bore (61) than over the other side of said feed bore (61).

5. A device according to claim 4, **characterized by** the fact that the centers (81) of the front surfaces (80) of the teeth (59) and the midplane of the milling wheel (58) are offset by a predetermined distance (d) from the axis of rotation of the anvil piece (60) so that said front surfaces (80) touch the cutting surface (63) of the anvil piece (60) over a longer distance on one side of the axis of rotation than on the other side so as to entrain the anvil piece (60) in rotation when the milling wheel (58) is set into rotation.

6. A device according to any one of claims 1 to 5, **characterized by** the fact that said means comprise a set of teeth (82) provided on the front faces (80) of said teeth (58) for co-operating with the cutting surface (63), said set of teeth (82) being arranged obliquely relative to the long direction of the front face (80).

7. A device according to any preceding claim, **characterized by** the fact that it includes hydraulic or pneumatic removal means (85, 86) for removing the cutoff segments of wire to a recovery tank (29).

8. A device according to claim 7, **characterized by** the fact that the removal means include a cutting chamber (86) in which the milling wheel (58) is arranged, said chamber being connected to at least one fluid inlet (85) and to an outlet duct (28) connected to a recovery tank (29).

9. A device according to claim 2, **characterized by** the fact that said setback (65) is in communication with a fluid so as to constitute a chamber for accumulating said fluid which acts as a lubricant between the anvil piece (60) and its support (71).
